# EUROPEAN PATENT APPLICATION

(11) **EP 4 610 150 A1**
(43) Date of publication of application: **03.09.2025**
(21) Application number: 25159204.4
(22) Date of filing: 20.02.2025
(51) Int. Cl.: B62D 55/065, B60K 6/00

(54) **IMPROVED WORK VEHICLE**

(30) Priority: 28.02.2024 IT 202400004357
(71) Applicant: CNH Industrial Italia S.p.A., 10156 Torino (IT)
(72) Inventor: Forte, Michelantonio, 10156 Turin (IT); Payne, Daniel, 10156 Turin (IT)
(74) Representative: CNH Industrial IP Department

(57) **Abstract**

There is described a work vehicle (1) comprising an articulated frame (2) and a plurality of ground engaging means (4) pivotally carried by the articulated frame (2) to allow motion of the work vehicle (1). The articulated frame (2) comprising a front portion (2a) pivotally carrying a first pair (4a) of the ground engaging means (4); a mid portion (2b) pivotally connected to the front portion (2a) so as to be able to rotate (2a) about a first rotation axis (R₁); and a rear portion (2c) pivotally connected to the mid portion (2b) so as to be able to rotate about a second rotation axis (R₂). The work vehicle (1) comprising a powertrain assembly (7) to provide torque to the ground engaging means (4).

## Description

### TECHNICAL FIELD

The present invention relates to a work vehicle, in particular an agricultural vehicle such as a tractor.

The present invention finds its preferred, although not exclusive, application in a hybrid-electric articulated tracked tractor. Reference will be made to this application by way of example below, without however losing in generality.

### BACKGROUND OF THE INVENTION

As is known, most modern and powerful tractors may be provided with an articulated chassis carrying an internal combustion engine and with ground-engaging tracks adapted to transmit to the ground the torque provided by the internal combustion engine.

In particular, the ground-engaging tracks allow to increase the work vehicle's traction on the ground with respect to standard wheels and at the same time to reduce the localized pressure exerted by the same tracks on the ground, thus reducing the soil compaction.

The articulated chassis of the aforementioned tractors usually comprises two portions pivotally connected to each other, to allow work vehicle steering.

In addition, the aforementioned articulated tracked tractors usually comprise the first pair of tracks carried by the front portion of the articulated chassis and a second pair of tracks carried by the rear portion of the articulated chassis.

Unfortunately, the design of the aforementioned tractors is affected by many constraints, which limit their outer dimensions and their maximum power.

For example, the maximum width of such tractors cannot exceed a lane width to be able to circulate freely on the road.

Moreover, in order to be able to be transported on the road by means of a truck, the same tractors must fit within a trailer length. Furthermore, the overall length of the tractors affects their turning radius and therefore their maneuverability.

In addition, the height of such tractors cannot exceed a maximum threshold, in order to be able to pass beneath most underpasses.

There are also constraints on the gross vehicle weight that tractors may have, in order to allow shipping, for example via cargo ships or on the road through trucks.

Therefore, engineers and designers of such tractors are usually bounded by the aforementioned constraints and in particular they cannot increase freely the power of the internal combustion engine of such articulated tracked tractors.

Indeed, the maximum power of the internal combustion engine is limited by the size and by the mechanical resistance of the components of the drivetrain and the axles of the tractors, which in turn are limited by the maximum allowable outer dimensions and weight of the same tractors.

However, recently some producers have been supplying the market with very large and heavy work implements, such as spread tillers, field cultivators, plough or rippers.

Unfortunately, it may happen that even the largest and most powerful tractors currently available on the market are not powerful enough to pull properly such work implements.

In view of the above, the need is felt for improvements in the field of work vehicles, in particular by addressing the aforementioned drawbacks and providing a work vehicle with increased maximum power.

Aim of the present invention is therefore to satisfy the abovementioned needs in a cost effective and optimized manner.

### SUMMARY OF THE INVENTION

The aforementioned aims are reached by a work vehicle as claimed in the appended set of claims.

### BRIEF DESCRIPTION OF DRAWINGS

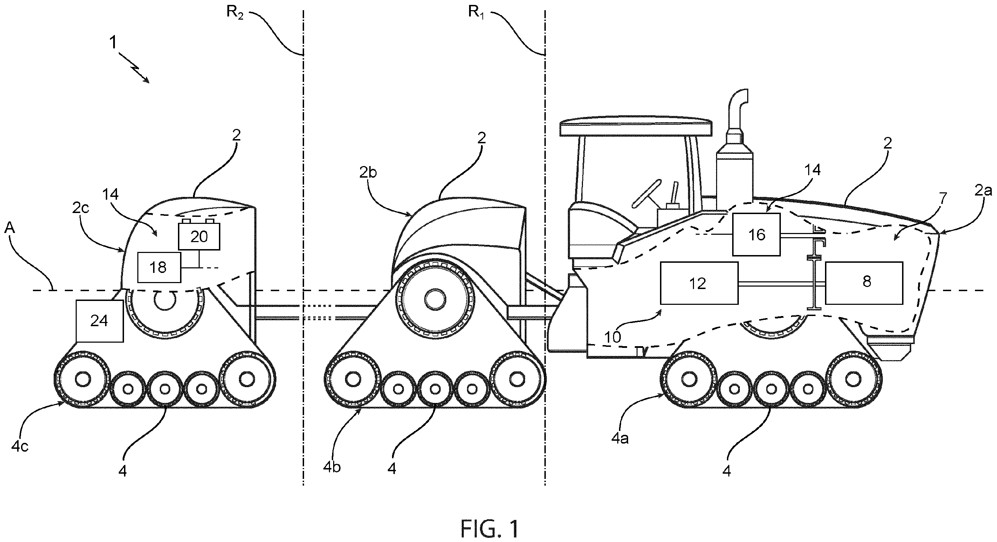

For a better understanding of the present invention, a preferred embodiment is described in the following, by way of a non-limiting example, with reference to the attached drawings, wherein Figure 1 is a schematic representation of a work vehicle according to the present invention.

### DETAILED DESCRIPTION OF THE INVENTION

With reference to Figure 1, reference number 1 denotes as a whole a work vehicle, for example an agricultural vehicle such as a tractor.

Work vehicle 1 comprises an articulated chassis/frame 2, which extends along a reference axis A and has a modular structure. In particular, articulated chassis/frame 2 comprises a plurality of portions/modules pivotally connected to each other.

In addition, work vehicle 1 comprises a plurality of ground engaging means 4, such as wheels or tracks, which are pivotally carried by the articulated chassis 2 to allow motion of the work vehicle 1 on the ground.

According to the exemplary embodiment illustrated in Figure 1, articulated chassis 2 comprises a front portion 2a pivotally carrying a first pair 4a (only partially illustrated in Figure 1) of ground engaging means 4, in particular tracks.

The first pair 4a of ground engaging means 4 are preferably pivotally connected to the front portion 2a of the articulated chassis 2 on opposite sides of the vertical mid-plane of the same front portion 2a.

Preferably, front portion 2a carries the driver's cab, in a manner per se known and therefore not further described.

In addition, articulated chassis 2 comprises a mid or central portion 2b, which is pivotally connected to the front portion 2a, along reference axis A, so as to be able to rotate/oscillate/pivot about a first rotation axis R₁ with respect to front portion 2a.

Preferably, first rotation axis R₁ is substantially orthogonal to the ground.

In addition, central portion 2b is preferably pivotally connected to front portion 2a so as to be able to rotate also about a rotation axis parallel to reference axis A.

In other words, the joint connecting front portion 2a and mid portion 2b has at least two degrees of freedom, allowing the same front portion 2a and the mid portion 2b to rotate with respect to each other about rotation axis R₁ and a further rotation axis parallel to reference axis A.

Mid portion 2b of articulated chassis 2 preferably pivotally carries a second pair 4b of ground engaging means 4, in particular tracks.

Second pair 4b of ground engaging means 4 are preferably pivotally connected to the mid portion 2b of the articulated chassis 2 on opposite sides of the vertical mid-plane of the same mid portion 2b.

With reference to the exemplary embodiment illustrated in Figure 1, articulated chassis 2 further comprises a rear portion 2c, which is pivotally connected to the mid portion 2b, along reference axis A, on the opposite side with respect to front portion 2a, so as to be able to rotate/oscillate /pivot about a second rotation axis R₂ with respect to mid portion 2b.

Preferably, second rotation axis R₂ is substantially orthogonal to the ground and/or parallel to first rotation axis R₁.

In addition, rear portion 2c is preferably pivotally connected to mid portion 2b so as to be able to rotate also about a rotation axis parallel to reference axis A.

In other words, the joint connecting mid portion 2b and rear portion 2c has two degrees of freedom, allowing the same mid portion 2b and the rear portion 2c to rotate with respect to each other about rotation axis R₂ and a further rotation axis parallel to reference axis A.

Rear portion 2c of articulated chassis 2 preferably pivotally carries a third pair 4c of ground engaging means 4.

Third pair 4c of ground engaging means 4 are preferably pivotally connected to the rear portion 2c of the articulated chassis 2 on opposite sides of the vertical mid-plane of the same rear portion 2c.

In addition, rear portion 2c is preferably connected to mid portion 2b in a removable manner.

In addition, rear portion 2c may further comprises a connection portion adapted to be connected to a trailer or a work implement to be attached to work vehicle 1.

For instance, such a connection portion may comprise a drawbar, a three-point hitch or similar connection portions.

With reference to the exemplary embodiment illustrated in Figure 1, work vehicle 1 further comprises a powertrain assembly 7, which is carried by articulated chassis 2 and is configured to provide torque to ground engaging means 4 to allow motion of the articulated chassis 2 with respect to the ground.

More in detail, powertrain assembly 7 comprises an internal combustion engine 8, for example a diesel-powered or a methane-powered internal combustion engine.

Preferably, internal combustion engine 8 is carried by front portion 2a of articulated chassis 2.

More in detail, as per se known, front portion 2a preferably comprises a housing accommodating the internal combustion engine 8.

In addition, powertrain assembly 7 comprises also a drivetrain assembly 10, which is operatively interposed between internal combustion engine 7 and the ground engaging means 4 and is configured to provide torque to the latter.

More in detail, drivetrain assembly 10 is configured to transmit torque to first pair 4a, to second pair 4b and/or to third pair 4c of ground engaging means 4.

With reference to the exemplary embodiment illustrated in Figure 1, drivetrain assembly 10 comprises a transmission 12, which is mechanically connected to an output shaft of internal combustion engine 8.

Transmission 12, in particular, is operatively interposed at least between internal combustion engine 8, first pair 4a of ground engaging means 4 and second pair 4b of ground engaging means 4.

In other words, transmission 12 is preferably mechanically connected to first pair 4a and to second pair 4b of ground engaging means 4.

More in detail, transmission 12 is preferably carried by first portion 2a and is mechanically connected to first pair 4a of ground engaging means 4 and to second pair 4b of ground engaging means 4 via driveshafts.

Transmission 12 is configured to transmit to first pair 4a of ground engaging means 4 and to second pair 4b of ground engaging means 4 the torque provided by internal combustion engine 7.

In particular, transmission 12 may comprise a full power-shift transmission, a semi power-shift transmission and/or a continuously variable transmission such as a hydro-mechanical power-split transmission, or a combination thereof, in a manner per se known and therefore not further described.

With reference to the preferred embodiment of the present invention, drivetrain assembly 10 may be provided with a hybrid-electric configuration.

More in detail, drivetrain assembly 10 preferably comprises an electric transmission 14 operatively interposed between internal combustion engine 8 and at least the third pair 4c of ground engaging means 4.

Transmission 12 and electric transmission 14 are arranged in parallel to each other.

Preferably, electric transmission 14 preferably comprises: a first electric machine 16, in particular an electric generator, carried by internal combustion engine 8; and at least a second electric machine 18, in particular an electric motor, which is electrically connected to first electric machine 16 and is mechanically connected the third pair 4c of ground engaging means 4, in order to drive the latter in rotation.

In addition, according to the preferred embodiment illustrated in Figure 1, electric transmission 14 may further comprise an electric energy storage system 20, in the following also referred to as "accumulator means", which is electrically connected to first electric machine 16 and to second electric machine 18 by means of electric power management means.

More in detail, first electric machine 16 is preferably mechanically coupled to the internal combustion engine 8 and, as known, is configured to transform the mechanical energy provided by the same internal combustion engine 8 into electric energy. Such electric energy may be stored into the accumulator means 20 and/or may be provided to second electric machine 18.

Second electric 18, on the other hand, is configured to provide torque to the third pair 4c of ground engaging means 4 to allow motion of the articulated chassis 2 with respect to the ground and optionally to transform the mechanical energy of work vehicle 1 into electric energy during work vehicle braking operation.

Preferably, first electric machine 16 is carried by front portion 2a of articulated chassis 2 and second electric machine 18 is carried by rear portion 2c of articulated chassis 2.

In particular, first electric machine 16 and second electric machine 18 is are operatively connected to each other by means of high-voltage electric cables.

In other words, there are no mechanical transmission shafts or other similar mechanical transmission components interposed between mid portion 2b and rear portion 2c.

According to the preferred embodiment of the present invention, accumulator means 20 comprises chemical-type accumulators. More in detail, accumulator means 20 preferably comprises a battery pack, in particular a lithium-ion battery pack.

Alternatively, accumulator means 20 may comprise one or more supercapacitors.

Electric power management means preferably comprise a power distribution unit, PDU, electrically connected to first electric machine 16, to second electric machine 18 and accumulator means 20, in order to manage the electric energy transfer among them. Preferably, the connection of power distribution unit is realized via inverters, which are operatively interposed between the power distribution unit and the corresponding electric machine 16 or 18.

In addition, with reference to the exemplary embodiment illustrated in Figure 1, work vehicle preferably further comprises a power-take-off assembly 24 carried by third portion 2c of articulated chassis 2.

In particular, power-take-off assembly 24 is preferably connected to electric transmission 14.

More in detail, power-take-off assembly 24 is preferably connected to second electric machine 18.

In even more detail, power-take-off assembly 24 preferably comprises a PTO transmission (not illustrated) connected to second electric machine 18 and a splined shaft (not illustrated), which is operatively connected to PTO transmission and is adapted to be mechanically connected to work implements or trailers towed or carried by work vehicle 1.

The operation of the above-described work vehicle 1 is the following.

In use, internal combustion engine 8 transmits mechanical power to first pair 4a and second pair 4b of ground engaging means 4 by means of transmission 12.

In addition, internal combustion engine 8 transmits mechanical power to third pair 4c of ground engaging means 4 by means of electric transmission 14, i.e. via first electric machine 16 and second electric machine 18.

Moreover, second electric machine 18 may absorb electric energy from accumulator means 20 to provide mechanical power to the third pair 4c of ground engaging means 4.

In view of the foregoing, the advantages of the work vehicle 1 realized according to the present invention are apparent.

In fact, thanks to the proposed modular configuration, it is possible to increase massively the overall output power of work vehicle 1 in a cost effective and optimized manner and without increasing the overall dimensions, in particular the width and the height, or the turning radius of the same work vehicle, with the obvious benefits that this entails.

In particular, work vehicle 1 can exploit most of the components already present in the work vehicles currently on the market, in particular the first two portions of the articulated chassis and all the transmission components such as transmission 12 and the related axles.

In addition, according to the proposed configuration with an articulated frame comprising three portions pivotally connected to each other, the turning radius and therefore the maneuverability of work vehicle 1 is not increased with respect to the one of a standard articulated tracked tractor.

In addition, by providing a third portion 4c provided with ground engaging means 4c operatively connected to internal combustion engine 8, it is possible to increase the power of the same internal combustion engine 8 without the need to increase the size of the axles Of the first 2a and second portion 2b of the articulated chassis 2, as a relevant fraction of the torque provided by the same internal combustion engine 8 is absorbed by the third portion 2c.

Moreover, by providing a third portion 4 carrying a further electric motor, such as an electric motor with 200 kW or more, it is possible to significantly increase the overall power of the work vehicle 1 without impacting on the transmission 12 and on the axles of first portion 2a and second portion 2b.

This clearly allows to avoid increasing the work vehicle width, to meet the width requirements to freely drive work vehicle 1 on the road.

In particular, it is increased the modularity of work vehicle 1, as simply by changing the size of internal combustion engine 8 and the size of electric transmission 14 it is possible to provide to the market work vehicles with different power sizes, without the need to perform modifications to the mechanical portion of the drivetrain assembly 10, i.e. to transmission 12.

Moreover, by providing a rear portion 4c which is easily detachable from mid portion 4b, the transportation on the road of work vehicle 1 is massively simplified, as it is possible to separate rear portion 4c from front portion 4a and mid portion 4b and transport the latter separately.

In addition, the arrangement of the accumulator means 20 in the third portion 4c allows to meet the weight distribution requirements of work vehicle 1 without the necessity to introduce further ballast on the same third portion 4c.

The provision of three pairs of tracks, in addition, allows to increase the traction of work vehicle 1 on the ground and therefore the torque the same work 1 is able to transmit to the ground.

In addition, the provision of three pairs of tracks allows to reduce the localized pressure exerted by the work vehicle 1 on the ground and therefore the resulting soil compaction.

Lastly, the two-degrees of freedom joints interposed respectively between front portion 2a and mid-portion 2b and mid portion 2b and rear portion 2c allows to these latter to twist with respect to each other about axes parallel to reference axis A, in order to copy the unevenness of the ground and maintain all the ground engaging means 4 stably in contact with the ground.

It is clear that modifications can be made to the described work vehicle which do not extend beyond the scope of protection defined by the claims.

At first, according to an alternative embodiment of the present invention (not illustrated), power take off assembly 24 may comprise a mechanical power take off assembly.

More in detail, power-take-off assembly 24 may be mechanically connected to internal combustion engine 8.

In even more detail, power-take-off assembly 24 may comprise a PTO transmission (not illustrated) connected to internal combustion engine 8 and a splined shaft (not illustrated), which is operatively connected to PTO transmission and is adapted to be mechanically connected to work implements or trailers towed or carried by work vehicle 1.

In addition, according to an alternative embodiment of the present invention (not illustrated), electric transmission 14 may further comprise a plurality of second electric machines 18, in particular a plurality of electric motors, which are electrically connected to first electric machine 16 and are mechanically connected to third pair 4c of ground engaging means 4 and at least to one between first pair 4a and second pair 4b of ground engaging means 4.

In particular, electric transmission 14 may comprise a plurality of second electric machines 18 mechanically connected to first pair 4a, second pair 4b and third pair 4c of ground engaging means 4.

In addition, according to a further embodiment of the present invention (not illustrated), transmission 12 may be mechanically connected also to third pair 4c of ground engaging means 4.

More in detail, transmission 12 may be connected to first pair 4a, second pair 4b and third pair 4c of ground engaging means 4, in order to transmit to these latter the torque provided by internal combustion engine 8.

In even more detail, transmission 12 may be mechanically connected to third pair 4c of ground engaging means 4 via a further driveshaft.

Alternatively, drivetrain assembly 8 may comprise a dedicated transmission (not illustrated), which is separate and distinct from transmission 12, is carried by rear portion 2c of articulated chassis 2 and is operatively interposed between internal combustion engine 8 and third pair 4c of ground engaging means 4. Such transmission, for instance, may comprise a full power-shift transmission, a semi power-shift transmission and/or a continuously variable transmission such as a hydro-mechanical power-split transmission, or a combination thereof.

In addition, according to this last embodiment, electric transmission 14 may not be present.

Finally, the configuration of transmission 12 may be different from the ones described above.

## Claims

1. A work vehicle (1) comprising an articulated frame (2) extending along a reference axis (A) and a plurality of ground engaging means (4) pivotally carried by said articulated frame (2) to allow motion of the work vehicle (1) on the ground;
said articulated frame (2) comprising
• a front portion (2a), which pivotally carries a first pair (4a) of said ground engaging means (4);
• a mid portion (2b), which is pivotally connected to said front portion (2a) so as to be able to rotate with respect to said front portion (2a) about a first rotation axis (R₁) transversal to said reference axis (A) and pivotally carries a second pair (4b) of said ground engaging means (4); and
• a rear portion (2c), which is pivotally connected to said mid portion (2b), on the opposite side with respect to said front portion (2a), so as to be able to rotate with respect to said mid portion (2b) about a second rotation axis (R₂) transversal to said reference axis (A) and pivotally carries a third pair (4c) of said ground engaging means (4);
said work vehicle (1) further comprising a powertrain assembly (7) configured to provide torque to said ground engaging means (4).

2. Work vehicle according to claim 1, wherein said powertrain assembly (7) comprises an internal combustion engine (8) and a drivetrain assembly (10), which is operatively interposed between said internal combustion engine (8) and said ground engaging means (4) and is configured to transmit torque to the first pair (4a), to the second pair (4b) and/or to the third pair (4c) of said ground engaging means (4).

3. Work vehicle according to claim 2, wherein said drivetrain assembly (10) comprises an electric transmission (14) operatively interposed between said internal combustion engine (8) and at least said third pair (4c) of ground engaging means (4).

4. Work vehicle according to claim 1, 2 or 3, wherein said internal combustion engine (8) is carried by said first portion (2a).

5. Work vehicle according to claim 3 or 4, wherein said electric transmission (14) comprises a first electric machine (16) carried by said internal combustion engine (8); and a second electric machine (18) which is electrically connected to said first electric machine (16) and is mechanically connected said third pair (4c) of said ground engaging means (4).

6. Work vehicle according to claim 5, wherein said electric transmission (14) furthers comprise an electric energy storage system (20), which is electrically connected to said first electric machine (16) and to second electric machine (18) and is carried by said read portion (4c).

7. Work vehicle according to claim 5 or 6, wherein said powertrain assembly (7) further comprises a second transmission (12) operatively interposed between said internal combustion engine (8), said first pair (4a) of ground engaging means (4) and/or said second pair (4b) of ground engaging means (4).

8. Work vehicle according to claim 7, wherein said electric transmission (14) and said second transmission (12) are arranged in parallel to each other.

9. Work vehicle according to claim 7 or 8, wherein said second transmission (12) comprises a powershift transmission, a continuously variable transmission or a combination thereof.

10. Work vehicle according to any of the preceding claims, wherein said ground engaging means (4) comprise tracks.

11. Work vehicle according to any of the preceding claims, further comprising a power-take-off assembly (24) carried by the third portion (2c) of said articulated chassis (2); said power-take-off assembly 24 being operatively connected to said second electric machine (18).

12. Work vehicle according to any of the preceding claims, wherein said rear portion (2c) is connected to said mid portion (2b) in a removable manner.
